# EUROPEAN PATENT SPECIFICATION

(11) **EP 3 374 327 B1**
(45) Date of publication and mention of the grant of the patent: **17.09.2025**
(21) Application number: 16801154.2
(22) Date of filing: 10.11.2016
(51) Int. Cl.: C04B 28/02, C04B 28/04, C04B 38/00, C04B 111/00, C04B 111/22, C04B 111/26

(54) **USE OF CALCIUM NITRATE TO MODIFY THE PERMEABILITY FOR CARBON DIOXIDE OF A HARDENED CEMENTITIOUS COMPOSITION**
VERWENDUNG VON CALCIUMNITRAT ZUR MODIFIZIERUNG DER KOHLENDIOXIDDURCHLÄSSIGKEIT EINER AUSGEHÄRTETEN ZEMENTÄREN ZUSAMMENSETZUNG
UTILISATION DE NITRATE DE CALCIUM POUR MODIFIER LA PERMÉABILITÉ AU DIOXYDE DE CARBONE D'UNE COMPOSITION CIMENTAIRE DURCIE

(30) Priority: 10.11.2015 NO 20151535
(43) Date of publication of application: 19.09.2018
(60) Divisional application: 18178525.4
(73) Proprietor: Yara International ASA, 0277 Oslo (NO)
(72) Inventor: FRANKE, Wolfram, 3917 Porsgrunn (NO); CILLUFFO, Giuseppe, 20024 Garbagnate Milanese (MI) (IT); TORABZADEGAN, Mehrdad, 3734 Skien (NO)
(74) Representative: De Clercq & Partners
(86) International application number: PCT/EP2016/077206
(87) International publication number: WO 2017/081119

(56) References cited:
- EP-A1- 2 888 208
- WO-A1-03/022773
- WO-A1-2010/026155
- WO-A1-2011/101595
- WO-A1-2014/048870
- WO-A1-2014/048871
- WO-A1-2014/182690
- JP-A- 2001 181 015
- US-A1- 2004 231 565
- US-A1- 2006 042 517
- US-A1- 2011 303 123
- US-B2- 8 323 399
- FRANKE ET AL.: "Effect of calcium nitrate on the freeze-thaw-resistance of concrete", THE PROCEEDINGS OF THE 2ND INTERNATIONAL CONGRESS ON DURABILITY OF CONCRETE AS PAPER NO. 8, 4 December 2014 (2014-12-04), XP002767201
- JUSTNES HARALD: "Calcium nitrate as a multi-functional concrete admixture", CONCRETE, THE CONCRETE SOCIETY, GB, vol. 44, no. 1, 1 February 2010 (2010-02-01), pages 34 - 36, XP008183283, ISSN: 0010-5317
- GRIEVE, G.; OWENS, G.: "Cement's Contribution to Development in the 21st Century", vol. 2, 11 May 2003, TECH BOOKS INTERNATIONAL, New Delhi, India, ISBN: 81-88305-12-X, article JUSTNES, H.: "Explanation of long-term compressive strength of concrete caused by the set accelerator calcium nitrate", pages: 713 - 728, XP008183290
- JUSTNES H ET AL: "Reasons for increase in long term compressive strength of concrete by the set accelerator calcium nitrate", KURDOWSKI SYMPOSIUM SCIENCE OF CEMENT AND CONCRETE, KRAKÓW, JUNE 20 - 21, 2001 / ED. BY WIESLAW KURDOWSKI POLAND, KRAKÓW : AKAPIT, 2001, PL, 21 June 2001 (2001-06-21), pages 265 - 278, XP008183405, ISBN: 83-7108-078-6

## Description

### Field of the application

The invention relates to the use of calcium nitrate to modify the permeability of a hardened cementitious composition.

The disclosure relates to the use of calcium nitrate to modify the pore size distribution of a cementitious composition after being set. The disclosure furthermore relates to a method for producing cementitious composition having a modified pore size distribution after being set. The disclosure also relates to a pourable concrete composition and a steel reinforced concrete solid (= steel reinforced hardened concrete) having an elevated resistance towards carbonation. The disclosure also relates to the use of calcium nitrate as an admixture for a steel reinforced concrete composition to increase the resistance towards carbonation of the steel reinforced hardened concrete. The disclosure finally relates to a method for producing a steel reinforced concrete solid having an elevated resistance towards carbonation of the concrete solid.

### Background of the application

Concrete is a composite construction material composed primarily of aggregate (a), cement (c), and water (w). Typically, ratios of w/c equaling to 0.3 to 0.6 by weight and a/c equaling to 3 to 6 by weight are common. This leads to cement contents of 300 to 500 kg/m³ of concrete. Admixtures are typically added as 0.5 weight% to 5.0 weight% of the cement weight. There are many formulations of added admixtures providing varied properties. The aggregate is generally coarse gravel or crushed rocks such as limestone, or granite, along with a fine aggregate such as sand. The cement is typically of the Portland cement group, but can also be plain, like CEM I, or blended, like CEM II, III or IV, wherein 20 to 50 weight% of the Portland cement is replaced by another semi-reactive material. Other cementitious materials such as fly ash and slag cement serve as a binder for the aggregate. Various chemical admixtures are also added to achieve varied properties.

When the water is mixed with the dry concrete mixture, it can be shaped (typically poured or casted) and then solidified and hardened (cured, set) into rock-hard strength concrete through a chemical process called hydration. The water reacts with the cement, which bonds the other components together, finally creating a robust stone-like material.

During the setting of the freshly produced concrete, the Portland cement phases (calcium silicates, calcium aluminates and calcium aluminum ferrites) react with water to form cement stone (calcium silicate hydrates, calcium aluminum hydrates and calcium aluminum ferrite hydrates). The hydration process leads to crystal formation as well as the formation of calcium hydroxide. The crystallization caused by the presence of water leads to the formation of voids in the cement stone, which typically forms about 3% of the volume of the hardened concrete. Those voids are generally partly connected which allows that gas and liquids are able to penetrate the concrete.

Apart from the possibility to have different concrete formulations providing varied properties, there is also a distinction between unreinforced and reinforced concrete. Typically, steel rebars are used to reinforce concrete. Those rebars are protected by the alkalinity (high pH value level) of the pore water in the concrete, due to the high concentration of calcium hydroxide therein. The rebars are necessary to bear tensile forces and are essential for instance in order to cope with the bending of concrete beams.

The mechanism that destructs steel reinforced concrete that is exposed to humidity is called carbonation. In this carbonation process, carbon dioxide or CO₂ migrates into the concrete via the voids, where it reacts with Ca(OH)₂ to CaCO₃ (lime stone). This causes a reduction in pH value. For the concrete itself, this is not a problem, but for the reinforcement it is. The reinforcement that is normally made of steel is affected by acidity. Consequently, a corrosive environment is created for the reinforcing steel. The consequence thereof is that the reinforcement fails and ultimately leads to the loss of the integrity of the structure of the reinforced concrete or spalling of the concrete.

This carbonation is however a slow process. The carbonation front moves through the concrete starting at the surface. The concrete layer separating the reinforcement from the ambient atmosphere has to have a certain thickness, given in Euro Code 2 or other guidelines depending on surrounding conditions. The reaction velocity increases with the porosity, as CO₂ can more easily diffuse into the concrete and react with Ca(OH)₂.

In order to solve this problem, typically coatings are applied. The term "coating" is often used broadly to refer to just about any liquid or semi-solid material applied to cured concrete, including cement-based toppings and overlays, paints, and epoxy-aggregate systems. Concrete sealers are applied to concrete to protect it from surface damage, corrosion, and staining. They either block the pores in the concrete to reduce absorption of water and salts or form an impermeable layer which prevents such materials from passing. An example of a concrete sealer is a topical sealer that can provide visual enhancement of the top layer of the concrete as well as topical protection from stains and chemicals. They require a dry and clean surface during application to gain adhesion. Another example of a concrete sealer is a penetrating sealer, such as silane or siloxane, that can be applied to dry or damp concrete surfaces. It is important that the penetrating sealers are properly matched with substrate porosity in order to effectively penetrate the concrete surface and react. The chemical reaction bonds active ingredients within the substrate blocking surface moisture. Other examples of coatings that are applicable to the concrete surface are topical film membranes such as acrylic resins and epoxy/urethane systems.

The disadvantage of all above described coatings is that they have a limited lifespan and they only protect a layer concrete situated close to the upper surface of the concrete. The highest concentration of the coating remains close to the surface. In case of destruction of this layer, for instance by chemical or physical impact, the protection gets lost.

As an alternative to coatings, cements that increase the density and reduce the porosity of the concrete can be used. An example thereof is ground granulated blast furnace slag cements (CEM III), what usually leads to a prolonged curing process and consequently is time and money consuming.

Another alternative is to add silica fume to the concrete, targeting the density and the porosity of the concrete. Such concretes however suffer from the disadvantage that they are more brittle and tend to get cracks when exposed to bending.

Still another alternative is to apply thicker concrete cover layers. However, also these layers tend to crack, especially under bending loads.

WO 2014/048871 relates to an admixture for a cementitious composition and a method using said admixture for manufacturing a durable cementitious composition, in particular a concrete, in cold weather conditions, such as in winter time or in cold geographical areas.

EP 2 888 208 relates to a multi-purpose mortar or cement composition for (i) inhibiting the corrosion of steel in mortar or cement structures, (ii) repairing, filling and/or spraying damages, cracks, flaws and cavities in mortar or cement structures and/or (iii) surfacing, coating and/or protecting mortar or concrete surfaces.

Out of the above, it can be concluded that currently, no successful solutions are known that maintain the common properties of the concrete and in the meantime prevent carbonation of concrete by an in-concrete solution. Therefore, there exists the need to provide a solution that meets these requirements.

### Summary of the application

The invention relates to the the use of calcium nitrate to modify the permeability of the hardened cementitious composition for carbon dioxide (CO2), wherein the cementitious composition comprises between 1 weight% to 4 weight% of calcium nitrate of the cement content (or by weight of cement) of the cementitious composition, depending on the type of cement.

According to a particular use according to the application, the cementitious composition is a concrete composition.

A void observed in a hardened concrete composition typically has a void diameter anywhere between 10 µm to 3000 µm. Although the pore size size distribution depends on several factors, such as the type of cementitious composition, the preparation and casting method, environmental conditions, and so on, on average an increased density of pores will be observed having a pore size of approximately 100 µm and of approximately 1000 µm. The total air void content in the entire volume of the cementitious composition then defines the porosity of the composition.

The modification of the pore size distribution of the hardened cementitious composition by adding calcium nitrate means that more smaller and less bigger voids in the hardened cementitious composition are obtained. It has been surprisingly found that adding a specific amount of calcium nitrate, depending on the type of cement used in the cementitious composition, obtains this effect. In this way, the permeability of the hardened cementitious composition for carbon dioxide (CO₂) is reduced. It is remarked that, although the pore size distribution of the hardened cementitious composition is altered, the porosity of the concrete solid however hardly changes.

In general, it is observed that the addition of calcium nitrate causes the void size distribution to shift towards the sub-300 µm range, in particular sub-150 µm range and more in particular sub-100 µm range; that is, the total of amount of voids with a void size below respectively 300, 150 and/or 100 µm increases while the total of amount of voids with a void size above respectively 300, 150 and/or 100 µm decreases by the same amount.

The void size distribution shift results in an increase of at least 5% to at most 50% in void count in the range from least 30 µm to at most 300 µm. The shift is more pronounced in the range from at least 50 to at most 150 µm, wherein an increase of at least 10% to at most 50% is observed. The shift is especially prominent in the range of 60 to 100 µm, wherein an increase is observed from at least 20% to at most 50%.

In a further aspect according to the application, calcium nitrate is used to increase the density of voids with a void diameter below 300 µm, particularly below 150 µm, most particularly below 100 µm by at least 10%; particularly at least 20%; more particularly at least 30 %; most particularly at least 40%.

Calcium nitrate is in particular used to increase the density of voids with a void diameter ranging from at least 30 µm to at most 300 µm by at least 5% to at most 50%; particularly at least 10% to at most 50%; more in particular at least 20 % to at most 45%; most in particular at least 30% to at most 45%.

More particularly, calcium nitrate is used to increase the density of voids with a void diameter ranging from at least 50 µm to at most 150 µm by at least 5% to at most 50%; particularly at least 10% to at most 50%; more in particular at least 20 % to at most 45%; most in particular at least 30% to at most 45%.

Most in particular, calcium nitrate is used to increase the density of voids with a void diameter ranging from at least 60 µm to at most 100 µm by at least 5% to at most 50%; particularly at least 10% to at most 50%; more in particular at least 20 % to at most 45%; most in particular at least 30% to at most 45%.

The article "Effect of calcium nitrate on the freeze-thaw-resistance of concrete", published in the proceedings of the 2nd International Congress on Durability of Concrete as paper no. 8, 4.-6.12.2014, New Delhi, India by Franke et al. (2014) already described in a study the effect that at the presence of calcium nitrate, the crystallization of the cementitious composition seems to be slightly changed from fewer large voids to more small voids. The study however did not evaluate the permeability and consequently void interlinks in a hardened cementitious composition that are responsible for the permeability.

It could now also be observed that calcium nitrate not only modifies the pore size distribution but also the void links and thus the permeability of the hardened cementitious composition. This results in limiting the gas migration, here carbon dioxide, as well as liquid migration, here hydrocarbon acid, into the hardened cementitious composition, more specific concrete.

According to the experiments as discussed in more detail further in this patent application, a reduction of the carbonation depth in the hardened cementitious composition of up to 40% are obtainable.

As a result of this modification of the pore size distribution, when such cementitious composition including calcium nitrate is used as a basis for steel reinforced concrete solid, the resistance towards the carbonation frontier of the hardened cementitious composition, or in other words the migration of carbon dioxide and the dissolution in water to form hydrocarbon acid, in the concrete solid is increased. In this way, the carbonation induced corrosion of the hardened concrete is reduced.

Particularly, the concrete composition comprises 300 - 500 kg cement per m³ hardened concrete, more in particular Portland cement.

More in particular, an amount of the cement is replaced by a cement replacement material at a concentration of between 0.1 weight% to 50 weight% of the cement content of the cementitious composition.

The cement replacement material is more in particular chosen out of any one of fly ash, ground granulated slag, lime stone or a combination thereof.

The concrete composition particularly comprises 150 - 300 kg water per m³ hardened concrete.

In particular, the concrete composition comprises between 1.500 - 1.800 kg aggregate per m³ hardened concrete.

More particularly, the aggregate comprises sand, gravel and stones.

Further disclosed herein, but not part of the invention, is a pourable and curable (wet) concrete composition, comprising per m³ cured concrete
- between 300 and 500 kg cement;
- between 150 and 300 kg water;
- between 1.500 and 1.800 kg aggregate; and
- between 1 weight% to 4 weight% of the cement content of the concrete composition, depending on the type of cement, of calcium nitrate.

In a possible concrete composition, an amount of cement is replaced by a cement replacement material at a concentration of between 0.1 weight% to 50 weight% of the cement content of the concrete composition.

In a particular embodiment of a concrete composition, the cement replacement material is chosen out of any one of fly ash, ground granulated slag, lime stone or a combination thereof.

Most in particular, the aggregate comprises sand, gravel and stones.

Most in particular, the cement is Portland cement.

It is remarked that, after water is added to a dry, cementitious (concrete) composition, consisting of the cement as the binder, the aggregate and the calcium nitrate, and mixing it, a wet, pourable cementitious (concrete) composition is obtained.

Further disclosed herein, but not part of the invention, is the use of calcium nitrate as an admixture for a steel reinforced concrete composition to increase the resistance towards carbonation of the steel reinforced hardened concrete is disclosed, wherein the concrete composition comprises cement and the calcium nitrate at a dosage of 1 weight% to 4 weight% of the of the cement content of the concrete composition.

In a more particular use, the concrete composition is one according to the application as disclosed above.

Further disclosed herein is the use of calcium nitrate as an admixture for a steel reinforced concrete composition to increase the density of voids with a void diameter below 300 µm, particularly below 150 µm, most in particular below 100 µm by at least 10%; particularly at least 20%; more in particular at least 30 %; most in particular at least 40%.

Particularly, calcium nitrate is used to increase the density of voids with a void diameter ranging from at least 30 µm to at most 300 µm by at least 5% to at most 50%;particularly at least 10% to at most 50%; more in particular at least 20 % to at most 45%; most in particular at least 30% to at most 45%.

Calcium nitrate is more in particular used to increase the density of voids with a void diameter ranging from at least 50 µm to at most 150 µm by at least 5% to at most 50%; particularly at least 10% to at most 50%; more in particular at least 20 % to at most 45%; most in particular at least 30% to at most 45%.

Calcium nitrate is most in particular used to increase the density of voids with a void diameter ranging from at least 60 µm to at most 100 µm by at least 5% to at most 50%; particularly at least 10% to at most 50%; more in particular at least 20 % to at most 45%; most in particular at least 30% to at most 45%.

Further disclosed herein, but not part of the invention, is a steel reinforced concrete solid having an elevated resistance towards carbonation that is obtained from curing the pourable and curable concrete composition according to the application as described above.

Further disclosed herein, but not part of the invention, is a method for producing a steel reinforced concrete solid having an elevated resistance towards carbonation, the method comprising the steps of:
I) preparing a concrete composition according to the disclosure as described above comprising mixing the water, the cement, the aggregate and the calcium nitrate;
II) casting the concrete composition into a form provided with a steel reinforcement; and
III) having the concrete composition hardened into the steel reinforced concrete solid with the elevated resistance towards carbonation.

### Brief description of the figures

- Fig. 1 shows a diagram wherein the carbonation depth in cm of two different cementitious compositions A and B under accelerated conditions is shown;
- Fig. 2 shows a diagram wherein the carbonation depth in cm of two different cementitious composition A and B under normal atmospheric conditions is shown.
- Fig. 3 shows a graph wherein the cumulative frequency in % is displayed in function of the void size in µm for three different cementitious compositions.

### Detailed description of the invention

The present invention relates to the use of calcium nitrate to modify the permeability of the hardened cementitious composition for carbon dioxide (CO₂), more preferably a hardened concrete composition. The modification of the pore size distribution of the hardened cementitious composition by adding calcium nitrate means that more smaller and less bigger voids in the hardened cementitious composition are obtained.

A pore is the void space embedded within the solid matrix of a porous media, here the hardened cementitious composition, more specifically the hardened concrete (also called "set" or "cured" concrete). The porosity of a hardened concrete is the total pore volume. When the pore size distribution of the cementitious composition is modified versus known state of the art set cementitious compositions, i.e. more smaller and less bigger voids, the permeability of the hardened cementitious composition for carbon dioxide (CO₂) is reduced.

Depending on the type of cement, 1 weight% (also called mass percent) to 4 weight% of calcium nitrate by weight of cement (cement content of the cementitious composition) is included in the dry cementitious composition (before water is added). All types of calcium nitrate can be used such as calcium nitrate solution or calcium nitrate containing granules.

The pourable and curable cementitious composition, also called "wet" cementitious composition, preferably the wet, pourable and curable concrete composition, preferably comprises per m³ cured concrete:
- 300 - 500 kg cement, preferably Portland cement, which serves as the binder of the cementitious composition (concrete);
- 150 - 300 kg water;
- 1.500 - 1.800 kg aggregate, preferably sand (fine aggregate), gravel and stones (coarse aggregate);
- 1 weight% to 4 weight% of calcium nitrate by weight of cement.

It is remarked that, after water is added to the dry, cementitious (concrete) composition consisting of the binder, the aggregate and the calcium nitrate as an admixture, and mixing the water with this dry, cementitious (concrete) composition, a pourable and curable, wet cementitious (concrete) composition is obtained that sets after a certain period of time.

Depending on the application and thus the required properties of the concrete, stones such as amongst others crushed rocks such as limestone or granite can be used.

It is possible to replace 0.1 weight% to 50 weight% of the cement by a cement replacement material such as fly ash, ground granulated slag, lime stone or any combination thereof.

Further disclosed herein is the use of calcium nitrate as an admixture for a steel reinforced concrete composition to increase the resistance towards carbonation of the steel reinforced hardened concrete, wherein the concrete composition comprises cement and the calcium nitrate at a dosage of 1 to 4 weight% of the cement weight.

It has been observed that, when the pore size distribution of the concrete solid is altered by adding a certain amount of calcium nitrate, an increase of the resistance towards the carbonation frontier of the steel reinforced concrete solid is obtained. In other words, the migration of carbon dioxide and the dissolution in water to form hydrocarbon acid, in the steel reinforced concrete, is increased.

Further disclosed herein is a method for producing a steel reinforced concrete solid having an elevated resistance towards carbonation, comprising the steps of:
(I) preparing a concrete composition according to the invention as disclosed above comprising mixing the water, the cement, the aggregate and the calcium nitrate;
(II) casting the concrete composition into a form provided with a steel reinforcement; and
(III) having the concrete composition hardened into the steel reinforced concrete solid with the elevated resistance towards carbonation.

Further disclosed herein is a steel reinforced concrete solid obtained from hardening the concrete composition according to the invention as disclosed above.

### Examples

### Example 1: Accelerated tests

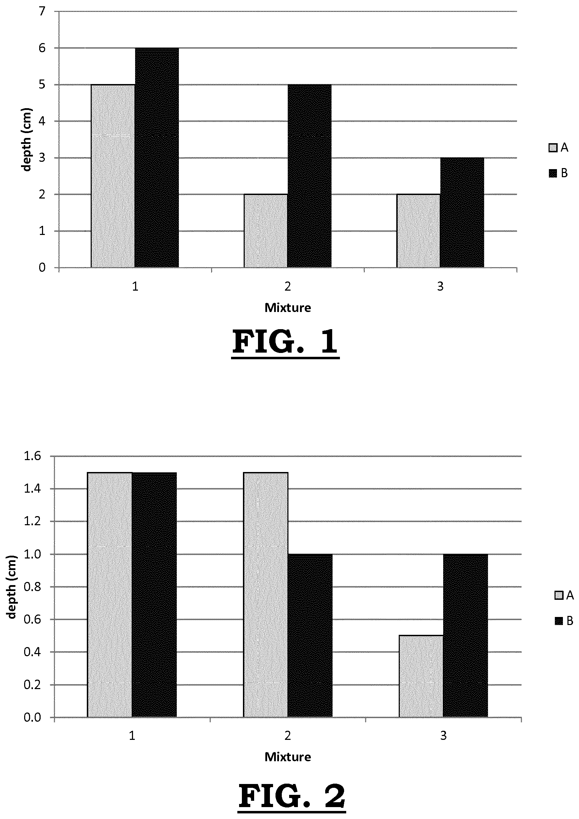

In a first case study, the carbonation in a number of concrete samples under accelerated conditions was studied. The samples were prepared with a water to cement ratio of 0.5. Two types of cement were used, i.e. CEM 142.5 R (A) and CEM II/A-V 42.5 R (B). The dosage levels of calcium nitrate were 0 weight% (1), 1 weight% (2) and 2 weight% (3). The samples were cured for a period of 28 days and afterwards exposed to an atmosphere with 2% CO₂ until 56 days. After 56 days, analysis of the carbonation depth was performed. In figure 1, a diagram is shown that shows the carbonation depth in average goes down. For CEM I, the carbonation depth is already minimized when using a 1 weight% calcium nitrate dosage, while for CEM II/V-A the carbonation depth is minimized when using 2 weight% calcium nitrate dosage.

### Example 2: Non-accelerated tests

In a second case study, the carbonation in a number of concrete samples under normal conditions was studied. The samples were prepared with a water to cement ratio of 0.5. Two types of cement were used, i.e. CEM I 42.5 R (A) and CEM II/A-V 42.5 R (B). The dosage levels of calcium nitrate were 0 weight% (1), 1 weight% (2) and 2 weight% (3). The samples were cured for a period of 28 days and afterwards exposed to ordinary atmosphere until 182 days. After 182 days, analysis of the carbonation depth was performed. In figure 2, a diagram is shown that shows that the carbonation depth in average goes down. For CEMI, the carbonation depth is already minimized when using a 2 weight% calcium nitrate dosage, while for CEM II/V-A the carbonation depth is minimized age.

### Example 3: Void size distribution tests

In a third case study, the effect of calcium nitrate on the void size distribution in a number of concrete samples was studied. The samples were prepared with a water to cement ratio of 0.5. The concrete compositions contained Ordinary Portland cement (OPC). Three reinforced concrete samples were prepared in cubes with an edge length of 150 mm.

The first and the second sample served as comparative reference values; in particular reference A contained a cementitious composition without any additives, while reference B contained a cementitious composition with a porosity increasing additive (e.g. admixture of surfactants) commonly used in the art. The third sample contained the composition of reference B together with 4 weight% of calcium nitrate by weight of cement.

Measurement of the total air void content indicated that the sample with 4% calcium nitrate lead to the highest porosity value of 6.0%; however, the 0.2% increment over the reference B porosity value of 5.8% was regarded as negligible. It is therefore concluded that the addition of calcium nitrate has almost no discernible effect on the porosity of reinforced concrete.

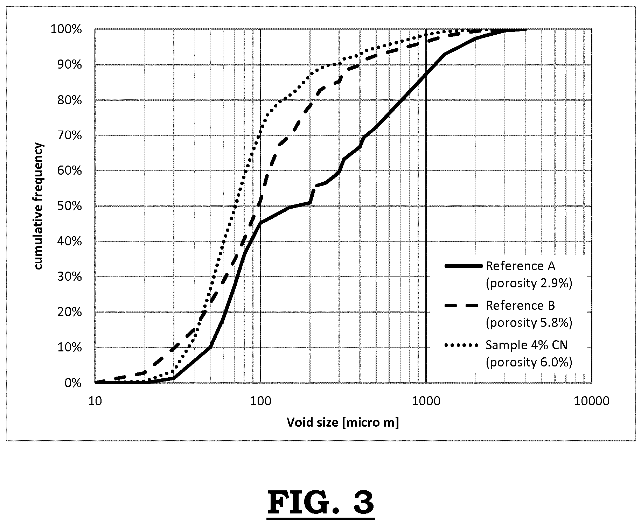

In contrast, measurements of the air void size distribution presented in Fig. 3 did display significant differences between the calcium nitrate sample and the two reference samples.

In general the addition of calcium nitrate caused the total number of voids with a void diameter below 300 µm to increase, while simultaneously causing the total number of voids with a void diameter above 300 µm to decrease; thus obtaining an effective void size shift to lower void sizes (i.e. to the left on Fig. 3) after addition of calcium nitrate. The formerly described shift becomes even more pronounced below 150 µm, and is especially prominent below 100 µm.

When focusing on the cut-off value of 100 µm in the sample containing 4% calcium nitrate, approximately 71% of voids now have a void diameter of 100 µm or less, while approximately 29% of voids to have a diameter above 100 µm. In comparison, at the same cut-off value for reference B, only 51% of voids have a void diameter below 100 µm, and for reference A this value even decreases to 45%. It is therefore concluded that the addition of calcium nitrate causes the void size distribution to shift by approximately 39% towards the sub-100 µm range; that is, the total of amount of voids with a void size below 100 µm increases by 39%, while the total of amount of voids with a void size above 100 µm decreases by the same amount.

Similar observations are noticeable at different cut-off value of the void diameter, and are presented below in Table 1, which shows an overview of the void size distribution ranges at selected cut-off values of 30, 50, 60, 70, 80, 100, 300, 1000 and 2000 µm.

A similar comparison can then be made between samples with the similar porosity values; namely reference B and the sample with 4% wt. calcium nitrate. The results are presented in Table 2.

In general it is found that the effect of calcium nitrate is already noticeable from 30 µm onwards, wherein the total number of voids increases by ~40% (i.e. approximation due to the low number of voids with a diameter of 30 µm or below) up to 300 µm, wherein the total number of voids increases by 6%.

**Table 1. Void size distribution ranges**

| **Cut-off value x** (in µm) | **Reference A** (porosity 2.9%) | **Reference B** (porosity 5.8%) | **Sample 4% CN** (porosity 6.0%) |
|---|---|---|---|
| 30 | 1%≤ x < 99% | 3%≤ x < 97% | 5%≤ x < 95% |
| 50 | 10%≤ x < 90% | 23%≤ x < 90% | 26%≤ x < 74% |
| 60 | 18%≤ x < 82% | 29%≤ x < 71% | 40%≤ x < 60% |
| 70 | 27%≤ x < 73% | 35%≤ x < 90% | 49%≤ x < 51% |
| 80 | 36%≤ x < 64% | 40%≤ x < 60% | 58%≤ x < 42% |
| 100 | 45%≤ x < 55% | 51%≤ x < 49% | 71%≤ x < 29% |
| 150 | 50%≤ x < 50% | 69%≤ x < 31% | 81%≤ x < 19% |
| 300 | 60%≤ x < 40% | 85%≤ x < 15% | 90%≤ x < 10% |
| 1000 | 87%≤ x < 13% | 96%≤ x < 4% | 98%≤ x < 2% |
| 2000 | 97%≤ x < 3% | 100% ≤ x | 100% ≤ x |

**Table 2. Comparative increment in void size amount**

| **Cut-off value** x (in µm) | **Reference B** (porosity 5.8%) | **Sample 4% CN** (porosity 6.0%) | Relative increment |
|---|---|---|---|
| 30 | 3%< x | 5%< x | ~40% |
| 50 | 23%< x | 26%< x | 13% |
| 60 | 29%< x | 40%< x | 37% |
| 70 | 35%≤ x | 49%≤ x | 40% |
| 80 | 40%≤ x | 58%≤ x | 45% |
| 100 | 51%≤ x | 71%≤ x | 39% |
| 150 | 69%≤ x | 81%≤ x | 17% |
| 300 | 85%≤ x | 90%≤ x | 6% |
| 1000 | 96%≤ x | 98%≤ x | 2% |
| 2000 | 100% ≤ x | 100% ≤ x | 0% |

However, the effect becomes clearly defined in the range of 50 to 150 µm, wherein the calcium nitrate shows an effective increase in void count by at least 13%; especially in the range of 60 to 100 µm the void count is observed to increase drastically by at least 37%. The highest void increment of 45% is observed for a void diameter of 80 µm.

After 300 µm the three samples are observed to equalize in the total number of voids, thus indicating that the total number of voids with a void diameter above 300 µm were reduced by the same amounts as previously reported and the total porosity is confirmed to remain unaffected by calcium nitrate.

In conclusion, the addition of 4% wt. calcium nitrate to the third sample caused the total number of voids with a void diameter below 300 µm to increase, in particular below 150 µm, more in particular below 150 µm; while simultaneously causing the total number of voids with a void diameter above respectively 300, 150 and/or 100 µm to decrease. As a result, the overall porosity of the hardened cementitious composition remained approximately similar, that is bringing about only discernible changes to the overall porosity, yet the pore size distribution was modified significantly.

## Claims

1. Use of calcium nitrate to modify the permeability for carbon dioxide of a hardened cementitious composition, wherein the cementitious composition comprises between 1 weight% to 4 weight% of calcium nitrate of the cement content of the cementitious composition, depending on the type of cement.

2. Use according to claim 1, wherein the cementitious composition is a concrete composition, preferably comprising 300 - 500 kg cement per m³ hardened concrete, preferably Portland cement.

3. Use according to claim 2, wherein an amount of the cement is replaced by a cement replacement material at a concentration of between 0.1 weight% to 50 weight% of the cement content of the cementitious composition, preferably wherein the cement replacement material is chosen out of any one of fly ash, ground granulated slag, lime stone or a combination thereof.

4. Use according to claim any one of the claims 2 or 3, wherein the concrete composition comprises 150 - 300 kg water per m³ hardened concrete.

5. Use according to any one of the claims 2 to 4, wherein the concrete composition comprises between 1.500 - 1.800 kg aggregate per m³ hardened concrete, preferably wherein the aggregate comprises sand, gravel and stones.

6. Use according to any one of the claims 1 to 5, wherein calcium nitrate increases the density of voids with a void diameter below 300 µm by at least 10%; preferably at least 20%; more preferably at least 30 %; most preferably at least 40%.

7. Use according to any one of the claims 1 to 6, wherein calcium nitrate increases the density of voids with a void diameter ranging from at least 30 µm to at most 300 µm by at least 5% to at most 50%; preferably at least 10% to at most 45%; more preferably at least 20 % to at most 45%; most preferably at least 30% to at most 45%.

8. Use according to any one of the claims 1 to 7, wherein calcium nitrate increases the density of voids with a void diameter ranging from at least 50 µm to at most 150 µm by at least 5% to at most 50%; preferably at least 10% to at most 45%; more preferably at least 20 % to at most 45%; most preferably at least 30% to at most 45%.

9. Use according to any one of the claims 1 to 8, wherein calcium nitrate increases the density of voids with a void diameter ranging from at least 60 µm to at most 100 µm by at least 5% to at most 50%; preferably at least 10% to at most 45%; more preferably at least 20 % to at most 45%; most preferably at least 30% to at most 45%.

## Patentansprüche

1. Verwendung von Calciumnitrat zum Modifizieren der Durchlässigkeit für Kohlendioxid einer gehärteten Zementzusammensetzung, wobei die Zementzusammensetzung, abhängig von dem Typ von Zement, zwischen 1 Gew.- % und 4 Gew.-% Calciumnitrat bezogen auf den Zementgehalt der Zementzusammensetzung enthält.

2. Verwendung nach Anspruch 1, wobei die Zementzusammensetzung eine Betonzusammensetzung ist, vorzugsweise umfassend 300 - 500 kg Zement pro m³ gehärtetem Beton, vorzugsweise Portlandzement.

3. Verwendung nach Anspruch 2, wobei eine Menge des Zements durch ein Zementersatzmaterial in einer Konzentration von zwischen 0,1 Gew.-% und 50 Gew.-% des Zementgehalts der Zementzusammensetzung ersetzt wird, wobei das Zementersatzmaterial vorzugsweise ausgewählt ist aus einem von Flugasche, gemahlener granulierter Schlacke, Kalkstein und einer Kombination davon.

4. Verwendung nach einem der Ansprüche 2 oder 3, wobei die Betonzusammensetzung 150 - 300 kg Wasser pro m³ gehärtetem Beton umfasst.

5. Verwendung nach einem der Ansprüche 2 bis 4, wobei die Betonzusammensetzung zwischen 1,500 - 1,800 kg Zuschlagstoff pro m³ gehärtetem Beton umfasst, wobei der Zuschlagstoff vorzugsweise Sand, Kies und Steine umfasst.

6. Verwendung nach einem der Ansprüche 1 bis 5, wobei Calciumnitrat die Dichte von Hohlräumen mit einem Hohlraumdurchmesser von unter 300 µm um wenigstens 10 % erhöht; vorzugsweise wenigstens 20 %; bevorzugter wenigstens 30 %; höchst bevorzugt wenigstens 40 %.

7. Verwendung nach einem der Ansprüche 1 bis 6, wobei Calciumnitrat die Dichte von Hohlräumen mit einem Hohlraumdurchmesser in dem Bereich von wenigstens 30 µm bis höchstens 300 µm um wenigstens 5 % bis höchstens 50 % erhöht; vorzugsweise wenigstens 10 % bis höchstens 45 %; bevorzugter wenigstens 20 % bis höchstens 45 %; höchst bevorzugt wenigstens 30 % bis höchstens 45 %.

8. Verwendung nach einem der Ansprüche 1 bis 7, wobei Calciumnitrat die Dichte von Hohlräumen mit einem Hohlraumdurchmesser in dem Bereich von wenigstens 50 µm bis höchstens 150 µm um wenigstens 5 % bis höchstens 50 % erhöht; vorzugsweise wenigstens 10 % bis höchstens 45 %; bevorzugter wenigstens 20 % bis höchstens 45 %; höchst bevorzugt wenigstens 30 % bis höchstens 45 %.

9. Verwendung nach einem der Ansprüche 1 bis 8, wobei Calciumnitrat die Dichte von Hohlräumen mit einem Hohlraumdurchmesser in dem Bereich von wenigstens 60 µm bis höchstens 100 µm um wenigstens 5 % bis höchstens 50 % erhöht; vorzugsweise wenigstens 10 % bis höchstens 45 %; bevorzugter wenigstens 20 % bis höchstens 45 %; höchst bevorzugt wenigstens 30 % bis höchstens 45 %.

## Revendications

1. Utilisation de nitrate de calcium pour modifier la perméabilité au dioxyde de carbone d'une composition cimentaire durcie, dans laquelle la composition cimentaire comprend entre 1 % en poids et 4 % en poids de nitrate de calcium de la teneur en ciment de la composition cimentaire, selon le type de ciment.

2. Utilisation selon la revendication 1, dans laquelle la composition cimentaire est une composition de béton, comprenant de préférence 300 à 500 kg de ciment par m³ de béton durci, de préférence du ciment Portland.

3. Utilisation selon la revendication 2, dans laquelle une quantité du ciment est remplacée par un matériau de remplacement du ciment à une concentration comprise entre 0,1 % en poids et 50 % en poids de la teneur en ciment de la composition cimentaire, de préférence dans laquelle le matériau de remplacement du ciment est choisi parmi l'un quelconque parmi des cendres volantes, du laitier granulé broyé, de la pierre calcaire ou une combinaison de ceux-ci.

4. Utilisation selon l'une quelconque des revendications 2 ou 3, dans laquelle la composition de béton comprend 150 à 300 kg d'eau par m³ de béton durci.

5. Utilisation selon l'une quelconque des revendications 2 à 4, dans laquelle la composition de béton comprend entre 1,500 et 1,800 kg d'agrégats par m³ de béton durci, de préférence dans laquelle les agrégats comprennent du sable, du gravier et des pierres.

6. Utilisation selon l'une quelconque des revendications 1 à 5, dans laquelle le nitrate de calcium augmente la densité des vides ayant un diamètre de vide inférieur à 300 µm d'au moins 10 % ; de préférence d'au moins 20 % ; plus préférablement d'au moins 30 % ; le plus préférablement d'au moins 40 %.

7. Utilisation selon l'une quelconque des revendications 1 à 6, dans laquelle le nitrate de calcium augmente la densité des vides ayant un diamètre de vide allant d'au moins 30 µm à au plus 300 µm d'au moins 5 % à au plus 50 % ; de préférence d'au moins 10 % à au plus 45 % ; plus préférablement d'au moins 20 % à au plus 45 % ; le plus préférablement d'au moins 30 % à au plus 45 %.

8. Utilisation selon l'une quelconque des revendications 1 à 7, dans laquelle le nitrate de calcium augmente la densité des vides ayant un diamètre de vide allant d'au moins 50 µm à au plus 150 µm d'au moins 5 % à au plus 50 % ; de préférence d'au moins 10 % à au plus 45 % ; plus préférablement d'au moins 20 % à au plus 45 % ; le plus préférablement d'au moins 30 % à au plus 45 %.

9. Utilisation selon l'une quelconque des revendications 1 à 8, dans laquelle le nitrate de calcium augmente la densité des vides ayant un diamètre de vide allant d'au moins 60 µm à au plus 100 µm d'au moins 5 % à au plus 50 % ; de préférence d'au moins 10 % à au plus 45 % ; plus préférablement d'au moins 20 % à au plus 45 % ; le plus préférablement d'au moins 30 % à au plus 45 %.
